# EUROPEAN PATENT APPLICATION

(11) **EP 0 905 679 A2**
(43) Date of publication of application: **31.03.1999**
(21) Application number: 98307716.5
(22) Date of filing: 23.09.1998
(51) Int. Cl.: G10L 7/10, G06T 11/60

(54) **Associating text derived from audio with an image**

(30) Priority: 26.09.1997 US 938735
(71) Applicant: Adobe Systems Incorporated, San Jose, California 95110-2704 (US)
(72) Inventor: Ullmann, Peter F., San Jose, California 95112 (US)
(74) Representative: Wombwell, Francis

(57) **Abstract**

System with methods and apparatus for rendering text converted from audio with an image. The image is captured using a photo-sensitive film camera or digital camera, or created using computer graphics software. Audio is captured either at the time of image capture or at another time. The captured image and audio are stored and associated with each other using a multimedia file format. The audio is converted to text using voice recognition software. A composite image is formed from the image and the converted text by positioning the converted text on or near the image. The composite image is output on a computer monitor, printer, or other output device.

## Description

The invention relates to associating text with an image, where the text is derived from audio associated with the image.

Cameras capture images and store them on film or a digital medium. Between the time an image is captured and the time it is printed or otherwise displayed, the photographer may forget or lose access to information related to the image, such as the time at which it was captured or the location of its subject matter.

Some film cameras and digital cameras allow text, such as text representing the date on which an image was captured, or digital information to be associated with a photograph. This text is typically created by the camera and superimposed on the image at a predetermined location in a predetermined format.

A digital camera captures an image and stores it in digital format on a computer-readable disk, flash memory, or other persistent storage medium. Each image may be stored in a separate file according to a standard format. The file may then be transferred to the memory of a computer, where it may then be operated on by computer software or hardware.

Audio and other information may be associated with an image file. The Kodak FlashPix image specification, for example, specifies a standard file format for storing images captured with a digital camera. An extension to the FlashPix specification allows one or more audio streams to be associated with, and therefore stored with, an image file. Software working in compliance with the extension may play back one or more of the audio streams associated with an image file while displaying the image file.

Voice recognition software converts audio signals representing human speech into text. Voice recognition software may be specialized for a limited task and recognize a limited number of words or be more general and create text by classifying speech phonetically. Voice recognition software can create computer-readable text from digitally represented audio. The text thus created can then be interpreted and manipulated by computer software and stored on computer-readable media.

It is possible to associate audio or text with a photograph at the time the photograph is captured by carrying a tape recorder or a notepad with the camera to record information associated with the picture being taken. Some digital cameras allow direct recording of audio with a picture while it is being captured. The audio may then be played back when the picture is viewed.

### Summary of the Invention

In one aspect, the invention applies a computational speech-to-text conversion process to audio data in a computer-readable memory to produce converted text. A composite image is created by compositing image data stored in the computer-readable memory and the converted text. The composite image is then printed on a printer or other suitable output device. The image data may be represented by an image taken by a camera and the audio data may represent speech recorded at about the same time the image was taken. The camera may be a digital camera comprising a microphone and be operable to record speech and to associate recorded speech with images taken by the camera.

The audio data and image data may be components of a single source file, which may be a file in FlashPix format. The audio data and image data may originate in separate source files. The audio and image data may be linked by a tag stored with the audio data or with the image data or with both the audio data and image data. The converted text may be stored on a mass storage device as an alias to the audio data. The converted text may be composited so as to cover a portion of the image represented by the image data, or so as not to cover any portion of the image represented by the image data.

The image data may represent a sequence of single images, and the audio data may represent a sequence of audio segments. One audio segment of the sequence of audio segments may be matched with one single image of the sequence of single images, before converting the one audio segment into a converted text segment and creating a single composite image by compositing the one single image and the converted text segment. Alternatively, for each single image of the sequence of single images, a composite image may be created by compositing the single image and the converted text.

One advantage of the present invention is that it associates text derived from audio data with image data. Because text may typically be stored, transmitted, and manipulated more quickly and efficiently than audio data, converting audio data to text and associating the converted text with an image can be advantageous over storing audio with an image.

A further advantage of the present invention is that it allows the association of audio data with image data to persist when the image data is printed, or when sound reproduction is not possible or practical, by converting the audio data to converted text and printing the converted text with the image data. In this way, the invention provides printed descriptive information, as contained in the audio data, relating to image data without requiring additional effort by the user.

A further advantage of the invention is that converted text can be stored in a standard computer text format, and thus may be manipulated and formatted by standard computer text processing software.

Another advantage of the invention is that the image data and associated audio data may be captured contemporaneously or at different times. They may be captured using a single device, such as a digital camera with a microphone and audio capture capabilities, or by different devices. Either the image data or the audio data, or both, may be human-originated or artificially created. The invention thus provides flexibility in creating, manipulating, and storing images, audio, and text.

Other features and advantages of the invention will be apparent from the following description and from the claims.

### Brief Description of the Drawings

FIG. 1 is a block diagram of a system made in accordance with the invention.

FIG. 2 is a flow diagram of the sequence of events initiated by a user choice to print an image file using the text associator process.

FIG. 3 illustrates converted text associated with an image.

FIG. 4 is a flow diagram of a method for converting audio data in a foreign language to subtitles in another language.

FIG. 5 illustrates a computer and computer elements suitable for implementing the invention.

### Detailed Description

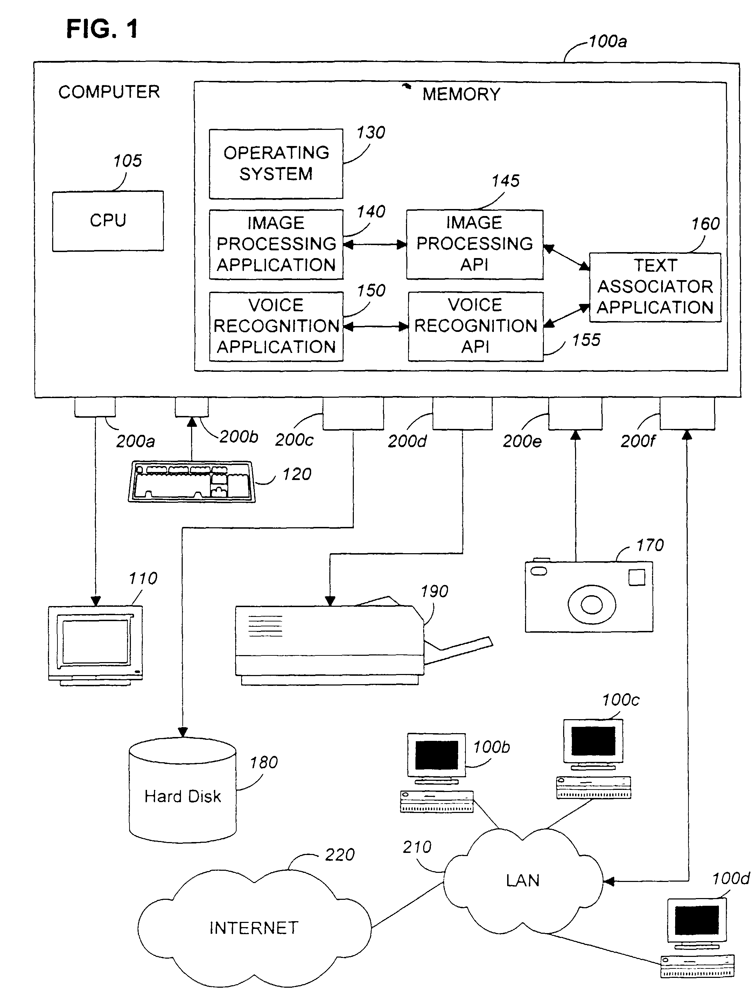

Referring to FIG. 1, a computer 100a displays output on a monitor 110 connected at I/O port 200a, obtains input from a keyboard 120 connected at I/O port 200b, and outputs hardcopy on a printer 190 connected at I/O port 200d. The computer 100a is also connected to a hard disk 180 for storing and retrieving files and other data at I/O port 200c, to a LAN 210 for communicating with other computers 100b-d, and to the Internet 220 through the LAN 210 for storing, archiving, and retrieving information. A digital camera 170 is capable of capturing a still image. The digital camera 170 also contains a microphone for capturing audio data associated with the image. The digital camera 170 converts the image and audio data into digital form, stores them in a multimedia file format with an audio component and an image component, such as the FlashPix format. The file is transferred to the computer 100a over I/O port 200e.

An image processing application 140, such as the Adobe Acrobat program (available from Adobe Systems Incorporated of San Jose, California), runs on the computer 100a. Also running on the computer 100a is a voice recognition application 150, such as Dragon Systems' Dragon Dictate, capable of converting audio data representing speech into converted text and storing the converted text in a computer-readable file. Also running on the computer 100a is a text associator application 160 for associating converted text with an image. The text associator application 160 communicates with the image processing application through an image processing API 145, which includes procedures for importing images, audio, and text into a file of the image processing application 140. The text associator application 160 communicates with the voice recognition application 150 through a voice recognition API, which includes procedures for converting audio data to converted text and for saving converted text in a text file.

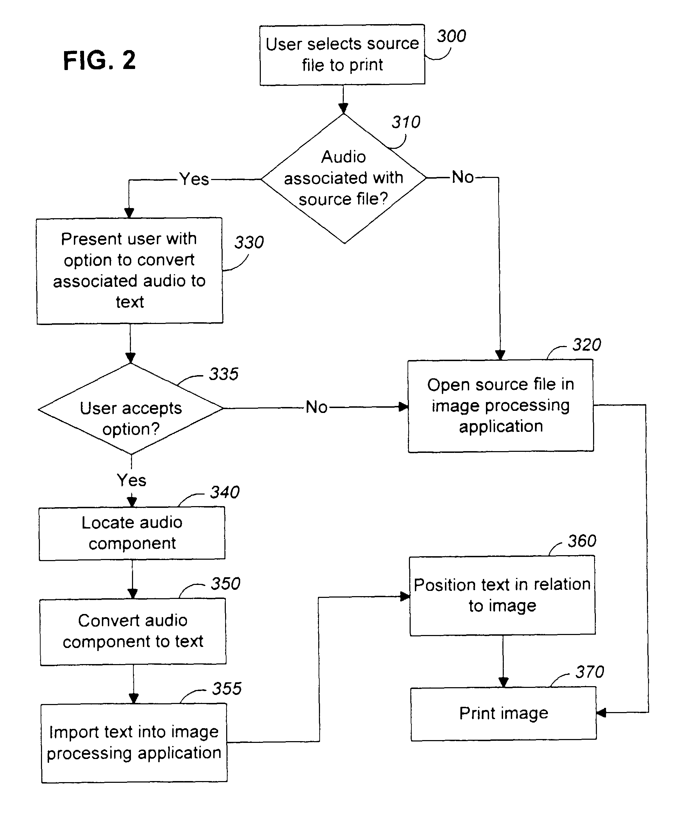

The text associator application 160 presents the user with a number of selectable options. One such option is an option to print a source file, such as a FlashPix file. The source file minimally contains an image component, but may also contain or be associated with an audio component. Referring to FIG. 2, when a user selects the option to print a source file (step 300), the text associator application 160 determines whether an audio component is associated with the image component contained in the source file (step 310). If no audio component is associated with the image component, the text associator process 160 opens the source file in the image processing application 140 by calling the image processing API 145 open file function (step 320). The text associator process 160 then prints the image component by calling the image processing API 145 print function (step 370).

If an audio component is contained in or associated with the source file, the user is presented with an option to convert the audio component to converted text (step 330). If the user declines the option, then the image component is opened and printed (steps 320 and 370) . If the user accepts the option, then the text associator application 160 locates the audio component (step 340). The text associator application 160 then converts the audio component to converted text by calling the voice recognition application API 155 speech-to-text function (step 350). The voice recognition application 150 stores the converted text in a file and passes the filename to the text associator application 160, which imports the converted text into the open source file by calling the image processing API 145 import text function (step 355).

Next, the text associator process positions the imported converted text in relation to the image component by calling the image processing API 145 text positioning functions, creating a composite image (step 360). Positioning of converted text may include a default text position, which may be the lower-center section of the image component. However, the converted text may be placed anywhere within the area of the image component, at any orientation. It may also be placed using any text placement features, such as right-left-center justification, or flow along a curve. The converted text may also be placed anywhere external to the area of the image component, e.g., underneath the image as a caption, or in a separate location from the image, e.g., as Microsoft PowerPoint Notes pages. The converted text can be formatted using the text formats available in the image processing application 140, which may include a default font and a default point size. The converted text may be stored in the image processing application text format, in vector or bitmap format, or as a separate text component file.

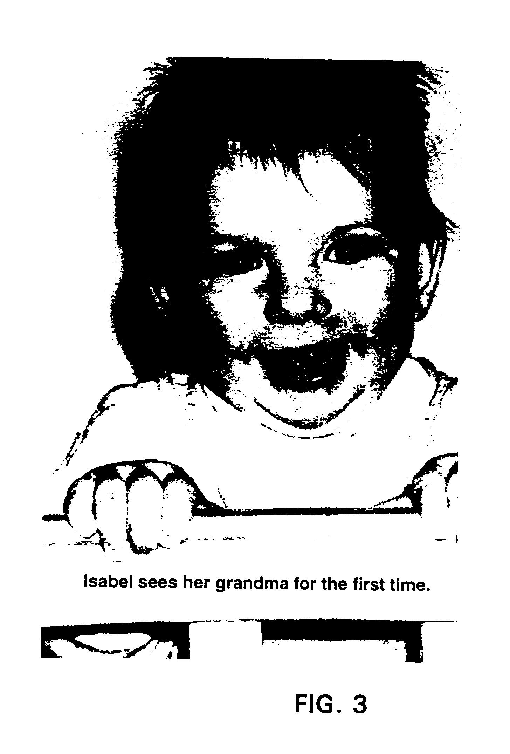

After the imported converted text has been positioned in relation to the image component, the text associator application 160 prints the image component, including the positioned imported converted text, by calling the image processing application API 145 print function (step 370). An example of converted text associated with an image is shown in FIG. 3.

Although the method of FIG. 2, as described above, prompt the user for input at steps 330 and 360, it may also operate automatically, without user input. When operating automatically, steps 330 and 335 are removed, and any audio component that is contained in or associated with a source file is automatically located and converted to converted text at steps 340 and 350. After the text has been imported at step 355, the converted text is positioned automatically at step 360 using default position settings. The image component, including the positioned imported converted text, is then printed at step 370. This process can be performed automatically on multiple source files by using wildcards in the source file specification at step 300, or by using a script or batch file.

Alternatively, the text associator application 160 may be implemented as a plug-in to the image processing application 140. In this form, the text associator application 160 adds several options to the image processing application 140 which may be selected by the user at any time that an image is displayed on the monitor 110. The user may add converted text previously converted from audio to the displayed image by selecting a source text file, to which the method of step 360 is then applied. If an audio component is currently associated with the displayed image, then the user may choose to convert the audio component into converted text and import the converted text into the image processing application using the methods of steps 350 and 355. The user may also choose to associate audio with the displayed image by selecting a separate audio file or by using another means to provide audio data to the image processing application, and then to convert the audio into converted text using the methods of steps 350 and 355.

An image may be saved with its associated audio and/or converted text components by a number of means. The converted text component may be attached directly to the image in the image processing application's 140 standard manner. The converted text component may be stored within the same file as the audio component file, within the image component file, or in a separate text file. The file may be saved by making the converted text an alias to an audio component of the application program, which in turn would be an additional component of the saved file. If the audio component is changed, use of an alias would allow auto-updating of the converted text component using the method of step 350. If an image is to be saved in a single file containing multiple images, a tag or identifier may be created associating the converted text component with a specific one of the multiple images.

An audio component may be associated with an image component by a number of means. The audio component may be saved in the same file as the image component according to the image processing application's 140 standard procedures, in which case a tag on the audio component and on the image component is used to indicate an association between the two components. Such a tagging scheme is used, for example, by the FlashPix format.

Alternatively, the audio component may be stored in a separate file from the file in which the image component is stored. In this case, a component of the filename of the separate audio file may match a component of the file name of the image component file. A digital tag in the audio component file may match a digital tag in the image component file. If there is more than one audio component to be associated with an image component file, then the same audio tag is shared among audio component files. If there is more than one image component shared with one or more audio components, then the same audio tag is shared among the respective image component files. The user may manually associate the audio component with the image component (e.g., audio tape to analog film, audio captured independently of image). A part of the audio component may be a tag for a part of the image component (e.g., the word 'three' may be used to match the third image of multiple images in the image component.

Conversion of audio data to converted text, and subsequent association of the converted text with image data, may be accomplished by a number of means. If the audio data is stored in a digital audio format that is not recognized by the voice recognition application 150, the audio data may be played through a speaker or converted to analog audio signals and output on an output line using appropriate player software, and then imported into the voice recognition application 150 in an appropriate digital audio format through a microphone or an input line.

The voice recognition application 150, which may be Dragon Systems' Dragon Dictate, may be used to convert the digital audio to converted text using a standard API. The image processing application 140 then uses standard text importation techniques to import the converted text, and to position the converted text in relation to an image according to step 360. The image, including the positioned converted text, may then be printed according to step 370, displayed on a monitor, or saved in a file as described above.

If an image is other than a digital image, such as a film negative or print, the method of step 350 can be used to convert the audio data to converted text. Then standard imprinting techniques can be used to physically print the converted text onto the image.

Audio, text, and image components may take a number of forms and be created by a number of means including, but not limited to, the following.

An image can be created by capturing the image with a digital camera or other imaging device, such as a film camera or a VHS recorder. Images may be created by digitizing photographs, scanning objects, or converting vector images to rasterized form.

Digital bit-mapped and pixel-mapped image formats which may be used include, but are not limited to, Graphics Interchange Format (GIF), Joint Photographic Experts Group format (JPEG), Tagged Image File Format (TIFF), Microsoft Windows bitmapped-graphics format (BMP), Adobe Photoshop format, and FlashPix format. Vector images which may be used include, but are not limited to, PostScript files, Adobe Illustrator files, and converted bitmapped images. Analog images which may be used include, but are not limited to, photographic film images (single or multiple frame, negative or positive), and motion video images such as VHS. Images representing a document page or document page component which may be used include an Adobe Portable Document Format (PDF) page or subpage, an image in a word processing document, or a spreadsheet cell or cells.

An image may contain multiple frames, in which case the user may be presented with an option to include the associated converted text on just the first frame or on a plurality of the multiple frames. The user may also choose to distribute the associated converted text across one or more of the multiple frames by, for example, associating a distinct portion of the converted text with each of the multiple frames in the image component.

Audio data may be created using a digital or analog audio recorder that is independent of the device used to create or capture the image data. For example, image data may be captured by a digital camera 170 and the audio data captured on a digital audio tape (DAT) by a microphone and DAT recorder. The image data and audio data may then each be separately imported into the computer 100a using standard means. The audio data may, but need not be, recorded human speech.

The audio data may be a digital or analog recording. The audio data may be compressed or non-compressed. A digital recording may be stored in a computer-supported format, such as RealAudio, QuickTime, or FlashPix. An analog recording may be stored on conventional tape, film strips, or other media, and converted to audio text by the voice recognition application 150 by, for example, playing the recording through a speaker and capturing the audio data with a microphone attached to an I/O port 200a-f of the computer 100a, or converted to analog audio signals and output on an output line using appropriate player software and then imported into the voice recognition application 150 through an input line.

Image data and associated audio data may be, but need not be, created or captured at the same time. For example, audio data from a library of pre-recorded samples may be associated with image data either at the time of image capture or at a later time. In some situations it might be useful to capture image data and record associated audio data later, such as when viewing the image data on a computer monitor.

Although the invention may use converted text derived from speech, it may also derive converted text from any component of an audio recording. For example, at step 350 a recording of a human singing may be converted to text, or a single voice may be selected from an audio recording containing multiple voices and then converted to converted text.

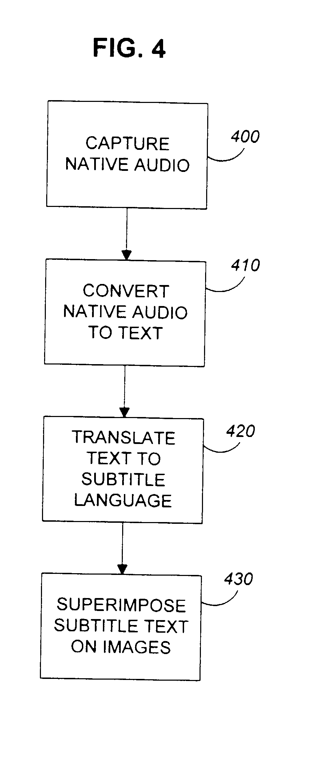

In an alternative embodiment, subtitles are superimposed on a motion picture, where the audio data is in the native language of the film, and where the converted text is in another language. Referring to FIG. 4, audio data from a film is captured (step 400). The audio data is converted to converted text using voice recognition software 150 (step 410). The converted text is translated to the desired subtitle language, using software such as the Nuance Speech Recognition Engine developed by Nuance Communications and SRI International of Menlo Park, California (step 420). The translated converted text is superimposed on the series of images with which the audio data is associated (step 430). Similarly, in conjunction with audio data from a video displayed on a video display, e.g., a television, the audio data is converted to converted text and displayed along with the video to support the hearing impaired.

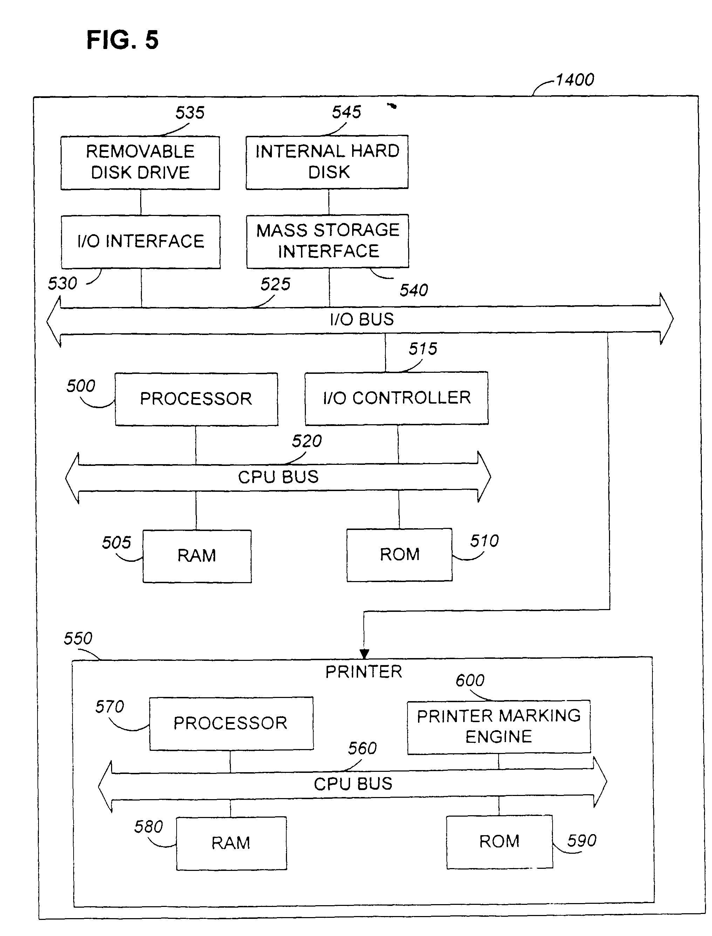

Referring to FIG. 5, the invention may be implemented in digital electronic circuitry or in computer hardware, firmware, software, or in combinations of them. Apparatus of the invention may be implemented in a computer program product tangibly embodied in a machine-readable storage device for execution by a computer processor; and method steps of the invention may be performed by a computer processor executing a program to perform functions of the invention by operating on input data and generating output. Suitable processors 500 include, by way of example, both general and special purpose microprocessors. Generally, a processor will receive instructions and data from a read-only memory (ROM) 510 and/or a random access memory (RAM) 505 through a CPU bus 520. A computer can generally also receive programs and data from a storage medium such as an internal disk 545 operating through a mass storage interface 540 or a removable disk 535 operating through an I/O interface 530. The flow of data over an I/O bus 525 to and from I/O devices 535 and 545, the processor 500, and memory 505, 510 is controlled by an I/O controller 515. User input is obtained through a keyboard, mouse, stylus, microphone, trackball, touch-sensitive screen, or other input device. These elements will be found in a conventional desktop or workstation computer as well as other computers suitable for executing computer programs implementing the methods described here, which may be used in conjunction with any digital print engine 600 or marking engine, display monitor, or other raster output device capable of producing color or gray scale pixels on paper, film, display screen, or other output medium.

By way of example, a printing device 550 implementing an interpreter for a page description language, such as the Postscript ® language, includes a microprocessor 570 for executing program instructions (including font instructions) stored on a printer random access memory (RAM) 580 and a printer read-only memory (ROM) 590 and controlling a printer marking engine 600. The RAM 580 is optionally supplemented by a mass storage device such as a hard disk (not shown).

Storage devices suitable for tangibly embodying computer program instructions include all forms of nonvolatile memory, including by way of example semiconductor memory devices, such as EPROM, EEPROM, and flash memory devices; magnetic disks such as internal hard disks 545 and removable disks 535; magneto-optical disks; and CD-ROM disks. Any of the foregoing may be supplemented by, or incorporated in, specially-designed ASICs (application-specific integrated circuits).

Although elements of the invention are described in terms of a software implementation, the invention may be implemented in software or hardware or firmware, or a combination of the three.

The present invention has been described in terms of an embodiment. The invention, however, is not limited to the embodiment depicted and described. Rather, the scope of the invention is defined by the claims.

## Claims

1. A computer-implemented method for displaying an image with text, comprising:
providing audio data and image data in a computer-readable memory;
applying a computational speech-to-text conversion process to the audio data to produce converted text;
creating a composite image by compositing the image data and the converted text; and
displaying the composite image.

2. The method of claim 1, wherein:
displaying comprises printing the composite image.

3. The method of claim 2, wherein:
the audio data and the image data are components of a single source file, preferably a FlashPix file.

4. The method of claim 2, wherein:
the audio data and the image data originate in separate source files.

5. The method of claim 2, wherein:
the computer-readable memory is a random access memory of a computer operable to execute computer program instructions;
the computational speech-to-text conversion process comprises computer program instructions executing on the computer;
the step of providing audio data and image data in a computer-readable memory comprises obtaining information linking the audio data and the image data to each other, finding the image data and the audio data stored on a mass storage device, and reading the image data and the audio data from the mass storage device into the random access memory; and
the step of creating a composite image comprises importing the image data and the converted text into an image processing application program, executing the image processing application program to format the converted text, to place the text with respect to the image, and to composite the placed, formatted text with the image data to produce the composite image.

6. The method of claim 5, wherein the image data and the audio data are in separate files stored on the mass storage device and the information linking the audio data and the image data to each other is a tag stored in at least one of the separate files.

7. The method of claim 5, wherein the converted text is composited so as to cover a portion of the image represented by the image data.

8. The method of claim 5, wherein the converted text is composited so as not to cover any portion of the image represented by the image data.

9. The method of claim 5, wherein the image data represents a single image.

10. The method of claim 5, wherein the image data represents a sequence of single images and the audio data represents a sequence of audio segments, the method further comprising:
matching one audio segment of the sequence of audio segments with one single image of the sequence of single images;
converting the one audio segment into a converted text segment; and
creating a single composite image by compositing the one single image and the converted text segment.

11. The method of claim 2, wherein the image data represents a sequence of single images, the method further comprising:
for each single image of the sequence of single images, creating a composite image by compositing the single image and the converted text; and
printing each of the composite images.

12. The method of claim 11, wherein the camera is a digital camera comprising a microphone and be operable to record speech and to associate recorded speech with images taken by the camera.

13. The method of claim 1 for printing an image with text, further comprising:
reading image data and audio data into a random access memory of a computer operable to execute computer program instructions;
applying a computation speech-to-text conversion process, comprising computer program instructions executing on the computer, to the audio data in the random access memory to produce converted text;
importing the image data and the converted text into an image processing application program, executing the image processing application program to format the converted text, to place the text near the bottom center of the image, and to composite the centered, formatted text with the image data to produce a composite image; and
printing the composite image.

14. A computer program product tangibly stored on a computer-readable medium, comprising instructions to:
read audio data and image data into a computer-readable memory;
convert the audio data to text;
composite the image data and the converted text to create a composite image; and
display the composite image, preferably by printing the composite image.

15. A system for displaying an image with text, comprising:
means for reading audio data and image data into a computer-readable memory;
means for converting the audio data to text;
means for compositing the image data and the converted text to create a composite image; and
means for displaying the composite image, preferably by printing the composite image.

16. The system of claim 15, further comprising:
means for reading image data and audio data into a random access memory of a computer operable to execute computer program instructions;
means for applying a computation speech-to-text conversion process, comprising computer program instructions executing on the computer, to the audio data in the random access memory to produce converted text; and
means for importing the image data and the converted text into an image processing application program, executing the image processing application program to format the converted text, to place the text near the bottom center of the image, and to composite the centered, formatted text with the image data to produce a composite image.

17. The system of claim 15, wherein the computer-readable memory is a random access memory of a computer operable to execute computer program instructions, the system further comprising:
means for reading image data and audio data into a random access memory of a computer operable to execute computer program instructions;
means for applying a computation speech-to-text conversion process, comprising computer program instructions executing on the computer, to the audio data in the random access memory to produce converted text; and
means for obtaining information linking the audio data and the image data to each other, finding the image data and the audio data stored on a mass storage device, and reading the image data and the audio data from the mass storage device into the random access memory; and
means for importing the image data and the converted text into an image processing application program, executing the image processing application program to format the converted text, to place the text with respect to the image, and to composite the placed, formatted text with the image data to produce the composite image.

18. The system of claim 15, wherein the image data represents a sequence of single images and the audio data represents a sequence of audio segments, the system further comprising:
means for matching one audio segment of the sequence of audio segments with one single image of the sequence of single images;
means for converting the one audio segment into a converted text segment; and
means for creating a single composite image by compositing the one single image and the converted text segment.

19. The system of claim 15, wherein the image data represents a sequence of single images, the method further comprising:
means for creating a composite image for each single image of the sequence of single images by compositing the single image and the converted text; and
means for printing each of the composite images.
